# EUROPEAN PATENT APPLICATION

(11) **EP 2 487 636 A1**
(43) Date of publication of application: **15.08.2012**
(21) Application number: 12154800.2
(22) Date of filing: 09.02.2012
(51) Int. Cl.: G06Q 30/02

(54) **System and method for topic based sentiment search and sharing across a network**

(30) Priority: 09.02.2011 US 201161441144 P
(71) Applicant: Vertical Axis, Inc., 14038 St. Michael (BB)
(72) Inventor: Ham, Kevin, Vancouver British Columbia V6B 4N5 (CA)
(74) Representative: Langenhuijsen, Bastiaan Wilhelmus Herman

(57) **Abstract**

A computer implemented method of collecting, exchanging and displaying both real-time and historical sentiments on a topic comprises establishing a topic upon which a sentiment can be rendered; detecting and storing a sentiment on said topic and causing said sentiment to be displayed for others to view.

## Description

### Field of the Invention

This invention relates to the collection and exchange of sentiments on topics using an internet infrastructure.

### Background of the Invention

The internet is one example of a network supported, public communication and data exchange system that enables isolated users to individually browse through an almost unlimited volume of informational content. Users can peruse through daily, hourly, or even minute-by-minute updated news publications, industry journals, blogs, tweets, list serves, video galleries (e.g., You Tube^{®}), photo galleries (e.g., Flicker^{®}), and so forth. For almost any general or unique topic a given first user may be currently interested in, or focused on, corresponding content is usually available somewhere out on the internet (or via another public information distributing means) for looking at by the first user (if the user knows its URL or other content access pathway to that informational content). The same content is typically available for concurrent study by other users. The specific topic areas that are of interest to each user may span from those that are socially popular (i.e., the latest fads), socially acceptable and/or economically valuable to ones that might be taboo or even border on the illegal. People's interests and immediate areas of focus (current attention) can be wide, varied over time and can often coincide by happenstance with the same interests of many others or with a same esoteric interest of a highly esoteric handful of other people, where the people who share a topic of interest may be situated (clustered) in a same local community or sparsely spread around the world.

Search tools such as GOOGLE^{®} and YAHOO!^{®} allow users to specify keywords to guide a search and return a result that is relevant to their interests. However, those search tools only provide access to content; they do not link the user with other users who are also sharing an interest in either the same or similar content. Likewise, innumerable chat rooms, forums, interactive games, clubs, and other interest-centric user interactions exist and are internet accessible, but a user must typically become aware of them then affirmatively contact the group(s) to interact with others relative to their shared interests

Social networks serve as one attempt to provide a way for users to find the information desired based on other users who have the same or similar interests. Rather than reviewing ranked lists of search results based on search terms, the user will have a greater likelihood of finding the desired information faster and with perhaps greater quality in the social network. These social networking websites allow users of the website to post content to the website, such as images, text, audio, video, etc. for experiencing by others. On many of these sites, the content can be experienced by all visitors to the website, or the content may only be available to those users who have been invited to access the content by the poster (often referred to as "friends" or "contacts").

Social bookmarking is a technique for sharing bookmarks with other users who may have similar interests. Social bookmarking sites take advantage of a large user community where the community members can submit links and vote on links submitted by other members. These sites can use the voting behavior to "filter" the links and present the items ordered by popularity. The primary value to the user is access to high-quality information, rather than the barrage of information that includes a mix of interesting and uninteresting content. Moreover, such sites can provide a venue for deriving revenue based on more focused advertising to groups of users associated with a particular subject.

US2009006442 provides a method which allegedly leverages aspects of self tagging and prediction. Machine learning and reasoning is employed to predict self-tags based on a website visited and/or website behavior, and self-tags associated with a website and/or webpage based on content of that website and/or webpage.

US2008222295 describes a system and method that uses internet content and/or content metadata as a means to establish social networks. Examples include linking internet users, searchers, viewers and/or listeners of the same and/or similar internet content to each other via a platform that enables any of the following in n-dimensional environments: social networking, communications, sharing, e-commerce, advertising, search, hosting and registry services, push and pull applications, anonymous communications, and rich presence.

US7305436 provides systems for providing content to multiple users, where the systems identify individual content elements within the content, and provide a discussion forum linked to each of the content elements. As one of the users views the content and associated content elements, the user has the option of selecting a particular content element, so as to interact with its associated discussion forum. Thus, multiple users may become viewers or members of a particular discussion forum.

U520090164475 teaches a method and system for constructing a social network using advanced content-based indexing, data and index sharing, and a peer-to-peer network in conjunction with a website interface. The system uses indexing techniques to identify and share common interests among users of the network, and integrated peer-to-peer software facilitates data sharing based on these interests. Users who wish to join the social network download client software from the network's website. When installed, the software indexes data on the user's local storage devices by considering possible high- and low-order links between data elements, mimicking human intuition. The indexing software generates an index of user data that is partitioned or into separate topic indexes

An example of a website that allows users to encourage the dissemination of content is Digg.com, which allows users to provide support for various Internet based content, by including an option whereby a user can "Dig" the content by clicking on the appropriate icon associated with the content. When the Dig icon is clicked the counter of "Digs" is incremented by one and the content with the most "Digs" within a specific time frame is listed with a link to the content at the website digg.com. In essence, users submit news content, video images and the like and such content gets voted on by other site users, allowing the loader to move up through the priority rank on the site. Conversation and commentary on the material uploaded is encouraged.

Popular content repositories, voting sites, and other social collaborative networks, such as the aforementioned, and other public photograph, journal, and video sites typically contain a vast amount of content. The interactions that users of such sites can take, such as commenting on and rating content can be orders of magnitude more numerous than the actual content itself. Searching based on people's impressions of feeling about content material is virtually impossible.

It would be desirable to have another way to collect and display more personal views on a specific topic. It is an object of the present invention to obviate or mitigate the above disadvantages.

### Summary of the Invention

The present invention provides a computer implemented method of collecting, exchanging and displaying both real-time and historical sentiments on a topic which comprises establishing a topic upon which a sentiment can be rendered; detecting and storing a sentiment on said topic and causing said sentiment to be displayed for others to view.

The present invention further provides a computer implemented method of collecting, exchanging and displaying both real-time and historical sentiments on a topic which comprises establishing a topic upon which a sentiment can be rendered; detecting and storing a sentiment on said topic and causing said sentiment to be displayed for others to comment upon, rate and/or share.

The present invention further provides a computer implemented method of collecting and displaying both real-time and historical sentiments on a given topic which comprises a means for detecting, upon a key-word search query by such user, substantially all sentiments previously expressed on said topic and displaying such sentiments previously expressed for user to view.

The present invention further provides a computer implemented method of a collecting, exchanging and displaying both real-time and historical sentiments on a topic by the following steps which include a) having a user ("Input User") input his/her sentiment on a topic ("Sentiment Input") for display on a web page which is accessible to a plurality of other users, said web page being available to users for the offering and receiving of such sentiments; b) optionally transmitting the Sentiment Input to a subset of web page users who may have previously expressed interest in following the sentiments of the Input User and/or following the topic; and c) storing the Sentiment Input such that it becomes searchable to all internet users based on keywords therein and in the topic itself.

The present invention further comprises a computer-readable storage medium having computer-executable code encoded therein for collecting, exchanging and displaying both real-time and historical sentiments on a topic by a user which comprises computer instructions for making available to a user a topic upon which a sentiment can be rendered; detecting and storing a sentiment by said user on said topic and causing said sentiment to be displayed for others to view.

The present invention further comprises a computer-readable storage medium having computer-executable code encoded therein for collecting and displaying both real-time and historical sentiments on a given topic which comprises computer instructions for making available to a user, upon a key-word search query by such user, substantially all sentiments previously expressed on said topic.

By way of this method and system, users can share sentiments on a topic, read other users sentiments on that topic, discover interesting new topics, and connect to users who share sentiments on given topics. The method provides a real-time sentiment stream, which can be used to gauge the pulse of a population's sentiment on any given topic. Topics are without limit but can include subjects such as people (including celebrities), places, things, events, religion, crime, politics, law, medicine, education, the arts (such as movie, television programs, theatre, concerts, live shows and spectacles, books and magazines), philosophy, science, and animals.

These and other objects and advantages of the present invention will become more apparent to those skilled in the art upon reviewing the description of the preferred embodiments of the invention, in conjunction with the figures and examples. A person skilled in the art will realize that other embodiments of the invention are possible and that the details of the invention can be modified in a number of respects, all without departing from the inventive concept. Thus, the following drawings, descriptions and examples are to be regarded as illustrative in nature and not limiting.

### Detailed Description of the Figures

Figure 1 is a block diagram of a system according to the present invention;
Figures 2 is a representation of a page on the beat.com website; and
Figure 3 is another representation of a page on the beat.com website depicting an alternative visual layout.

### Detailed Description of the Invention

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

In other words, the invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

In this specification the terms "comprise, comprises, comprised and comprising" and the terms "include, includes, included and including" are deemed to be totally interchangeable and should be afforded the widest possible Interpretation.

As used herein, the term "about" in connection with a measured quantity, refers to the normal variations in that measured quantity, as expected by a skilled artisan making the measurement and exercising a level of care commensurate with the objective of measurement.

As used herein, the singular forms "a," "an," and "the" include plural referents unless the context clearly dictates otherwise. For example, reference to "a substituent" encompasses a single substituent as well as two or more substituents, and the like.

As used herein, the terms "for example," "for instance," "such as," or "including" are meant to introduce examples that further clarify more general subject matter. Unless otherwise specified, these examples are provided only as an aid for understanding the applications illustrated in the present disclosure, and are not meant to be limiting in any fashion.

The present invention is about capturing and making viably available, on a website, the expression of sentiments, real-time and historical on any given topic. By use of the method and system of the present invention, a sentiment can be captured on a topic at a given time, representing the historical zeitgeist or the spirit of that time. Equally importantly, topic sentiments may be searchable by age, gender, geography other demographic metric. For example, the method encompasses the capture of all sentiments on a given topic from any given historical point in time to the present, streaming continuously in real-time, with additional users liking, disliking and/or sharing previous sentiments and creating their own sentiments.

Within the scope of the present invention "sentiment" is taken to mean one or more the of following:
- a thought, view, or attitude, especially one based mainly on emotion instead of purely reason
- a thought influenced by or proceeding from feeling or emotion
- the thought or feeling intended to be conveyed by words as distinguished from acts or gestures
- exhibition or manifestation of feeling or sensibility, or appeal to the emotions

The invention can be implemented in numerous ways, including as a process, an apparatus, a system, a computer readable medium such as a computer readable storage medium or a computer network wherein program instructions are sent over optical or communication links. In this specification, these implementations, or any other form that the invention may take, may be referred to as systems or techniques. A component such as a processor or a memory described as being configured to perform a task includes both a general component that is temporarily configured to perform the task at a given time or a specific component that is manufactured to perform the task. In general, the order of the steps of disclosed processes may be altered within the scope of the invention.

The following discussion provides a brief and general description of a suitable computing environment in which various embodiments of the system may be implemented. Although not required, embodiments will be described in the general context of computer-executable instructions, such as program applications, modules, objects or macros being executed by a computer. Those skilled in the relevant art will appreciate that the invention can be practiced with other computer configurations, including hand-held devices, multiprocessor systems, microprocessor-based or programmable consumer electronics, personal computers ("PCs"), network PCs, mini-computers, mainframe computers, and the like. The embodiments can be practiced in distributed computing environments where tasks or modules are performed by remote processing devices, which are linked through a communications network. In a distributed computing environment, program modules may be located in both local and remote memory storage devices.

A computer system may be used as a server including one or more processing units, system memories, and system buses that couple various system components including system memory to a processing unit. Computers will at times be referred to in the singular herein, but this is not intended to limit the application to a single computing system since in typical embodiments, there will be more than one computing system or other device involved. Other computer systems may be employed, such as conventional and personal computers, where the size or scale of the system allows. The processing unit may be any logic processing unit, such as one or more central processing units ("CPUs"), digital signal processors ("DSPs"), application-specific integrated circuits ("ASICs"), etc. Unless described otherwise, the construction and operation of the various components are of conventional design. As a result, such components need not be described in further detail herein, as they will be understood by those skilled in the relevant art.

A computer system includes a bus, and can employ any known bus structures or architectures, including a memory bus with memory controller, a peripheral bus, and a local bus. The computer system memory may include read-only memory ("ROM") and random access memory ("RAM"). A basic input/output system ("BIOS"), which can form part of the ROM, contains basic routines that help transfer information between elements within the computing system, such as during startup.

The computer system also includes non-volatile memory. The non-volatile memory may take a variety of forms, for example a hard disk drive for reading from and writing to a hard disk, and an optical disk drive and a magnetic disk drive for reading from and writing to removable optical disks and magnetic disks, respectively. The optical disk can be a CD-ROM, while the magnetic disk can be a magnetic floppy disk or diskette. The hard disk drive, optical disk drive and magnetic disk drive communicate with the processing unit via the system bus. The hard disk drive, optical disk drive and magnetic disk drive may include appropriate interfaces or controllers coupled between such drives and the system bus, as is known by those skilled in the relevant art. The drives, and their associated computer-readable media, provide non-volatile storage of computer readable instructions, data structures, program modules and other data for the computing system. Although a computing system may employ hard disks, optical disks and/or magnetic disks, those skilled in the relevant art will appreciate that other types of non-volatile computer-readable media that can store data accessible by a computer system may be employed, such a magnetic cassettes, flash memory cards, digital video disks ("DVD"), Bernoulli cartridges, RAMs, ROMs, smart cards, etc.

Various program modules or application programs and/or data can be stored in the computer memory. For example, the system memory may store an operating system, end user application interfaces, server applications, and one or more application program interfaces ("APIs").

The computer system memory also includes one or more networking applications, for example a Web server application and/or Web client or browser application for permitting the computer to exchange data with sources via the Internet, corporate Intranets, or other networks as described below, as well as with other server applications on server computers such as those further discussed below. The networking application in the preferred embodiment is markup language based, such as hypertext markup language ("HTML"), extensible markup language ("XML") or wireless markup language ("WML"), and operates with markup languages that use syntactically delimited characters added to the data of a document to represent the structure of the document. A number of Web server applications and Web client or browser applications are commercially available, such those available from Mozilla and Microsoft.

The operating system and various applications/modules and/or data can be stored on the hard disk of the hard disk drive, the optical disk of the optical disk drive and/or the magnetic disk of the magnetic disk drive.

A computer system can operate in a networked environment using logical connections to one or more client computers and/or one or more database systems, such as one or more remote computers or networks. A computer may be logically connected to one or more client computers and/or database systems under any known method of permitting computers to communicate, for example through a network such as a local area network ("LAN") and/or a wide area network ("WAN") including, for example, the Internet. Such networking environments are well known including wired and wireless enterprise-wide computer networks, intranets, extranets, and the Internet. Other embodiments include other types of communication networks such as telecommunications networks, cellular networks, paging networks, and other mobile networks. The information sent or received via the communications channel may, or may not be encrypted. When used in a LAN networking environment, a computer is connected to the LAN through an adapter or network interface card (communicatively linked to the system bus). When used in a WAN networking environment, a computer may include an interface and modem or other device, such as a network interface card, for establishing communications over the WAN/Internet.

In a networked environment, program modules, application programs, or data, or portions thereof, can be stored in a computer for provision to the networked computers. In one embodiment, the computer is communicatively linked through a network with TCP/IP middle layer network protocols; however, other similar network protocol layers are used in other embodiments, such as user datagram protocol ("UDP"). Those skilled in the relevant art will readily recognize that these network connections are only some examples of establishing communications links between computers, and other links may be used, including wireless links.

While in most instances a computer will operate automatically, where an end user application interface is provided, a user can enter commands and information into the computer through a user application interface including input devices, such as a keyboard, and a pointing device, such as a mouse. Other input devices can include a microphone, joystick, scanner, etc. These and other input devices are connected to the processing unit through the user application interface, such as a serial port interface that couples to the system bus, although other interfaces, such as a parallel port, a game port, or a wireless interface, or a universal serial bus ("USB") can be used. A monitor or other display device is coupled to the bus via a video interface, such as a video adapter (not shown). The computer can include other output devices, such as speakers, printers, etc.

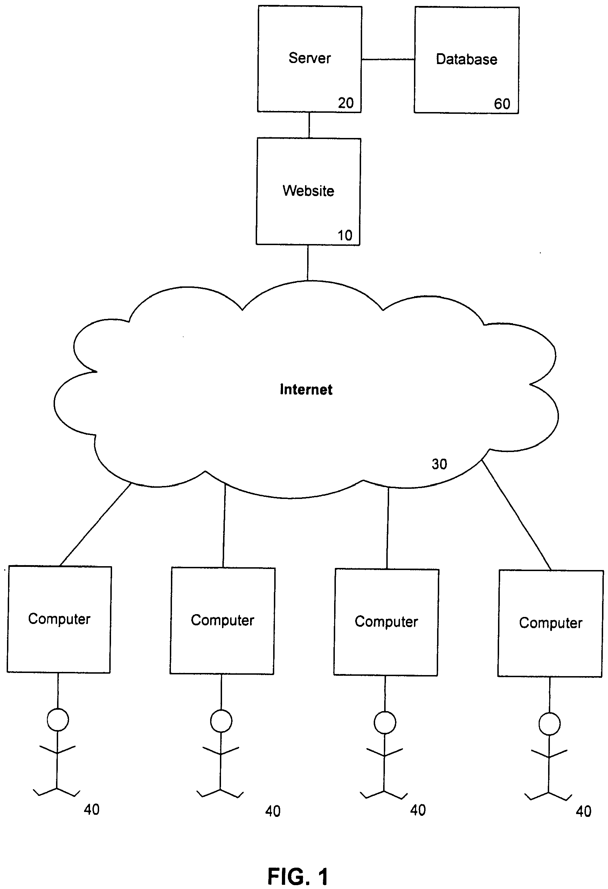

As seen in Figure 1, the system and method according to the invention are for use with a website 10 operated on a server 20, accessible over the Internet 30 by users 40, using computer systems 50, who may search, view and post sentiment content on website 10 and have an ability to view sentiment content posted on the website 10 by other users 40.

The website 10 is a collection of web pages, hosted on one or more servers 20. Users 40 typically connect to website 10 on the Internet using hyperlinks, also referred to as links. By clicking on a link, a user 10 directs a browser operating on computer system 50 to open a window on the monitor of the computer system 50 showing the website associated with the link.

Typically users 40 must register with website 10 to contribute his or her own sentiment on a topic to website 10. Such a registration system may include obtaining information about the user 40 such as their name, email address, geographic information, such as address, or country of residence, and the like. Once registered, users 40 can log on to website 10 using a user name and password, which are provided by server 20 or selected by the user on registration. The user 40 will also be provided a personal web page at website 10 at which they can upload and display content, preferences and their sentiments or other user sentiments for other users 40.

Server 20 has database 60 which stores the website, the content thereon, associated web pages, records about each user 40 and the content, and information about each link.

Website 10 provides a home web page including a list of topics, sentiments, rankings, and links to other sites if relevant to topics. Additional information associated with the topics and sentiments may also be displayed. Such information may include the "reach" of the topics. The reach of the topic is based on both the number of users 40 who have considered the topic and who have expressed sentiments on the topic and the number of countries in which users 40 have considered the topic, based on either the geographic locations provided by registered users or by using the IP address or email address of a user 40 to determine the country of origin of the user. Other information displayed near the topics and sentiments may be user ratings (for example like, unlike) related to the sentiment, number of times sentiment was forwarded/shared etc.

When a user 40 visits the home page, they may log in, if they are a registered user. If they are not a registered user, they may be unable to access certain features of the website, but server 20 records the IP address of the unregistered user, and offers the unregistered user an opportunity to register.

When a user 40 registers, they obtain an account, and provide, to the system, their first name, last name, geographic location (by city or town) and birthday. The system may also request information about the device being used to access the web page, for example the type of computer, the manufacturer of the computer, the browser being used, etc. The user then selects a password and username for accessing website 10.

The process according to the invention includes any one or more of the following:
a) a registered user 40 searching website 10 for sentiments on a chosen topic;
b) a non-registered user searching website 10 for sentiments on a chosen topic;
c) a registered user loading a topic "query" for sentiment collection by other users;
d) website administrators loading a topic "query" for sentiment collection by users;
e) a website user liking, disliking or other rating sentiments of other users;
f) a system or technique for ranking sentiments based on greatest number of likes, dislikes, forwards/sharing and commentary;
g) a system or technique for a user to follow any other user or any topic;
h) a system or technique for a user to receive notification (via email or other means) that a given other user is following him/her and his/her sentiment stream; and
i) a system or technique for users to receive notification of "top" sentiments of each day.

A site user who has provided a sentiment on a topic ("Input User") may send a message regarding this sentiment ("Sentiment Input") to his or her contacts. In addition, other users who are not contacts with the Input User may have previously requested of the website that he or she be alerted when sentiments on a given topic were expressed, and as such would automatically receive notification of said Sentiment Input.

In operation, with a preferred form of the invention:
1) a topic is made available for viewing and/or expression of sentiments;
2) users give sentiments (will be called "Beats™") on a said topic (it is expected that these will be about 500 characters (50 words or 1/10^{th} of page);
3) after inputting sentiment, but before publication of said sentiment, user (if 1^{st} time user) will be prompted to sign up to the website;
4) after inputting sentiment, but before publication of said sentiment, user (if registered user) will simply log in directly to site or via indirect log in. For example, Facebook^{®} Connect is a service offered by Facebook so that people can log into their favorite sites using their Facebook username and password. Facebook Connect also allows a user to employ his or her name and profile photo from user's Facebook account onto the website of the present invention and to easily share with friends/contacts by posting sentiments (user Beats), comments, and submissions to user's Facebook feed.
5) users will have option of following one or more other users as to their sentiment postings (and will have the option of receiving email notifications of such new postings, preferably via a notifications section of said user's profile page);
6) users will have option of following one or more topics (and will have the option of receiving email notifications of any new sentiments on such topics), preferably via a notifications section of said user's profile page;
7) users will be apprised of top sentiments (Beats) on pre-determined and agreed time schedules.
8) system will record and store topics, sentiments and "reactions to sentiments

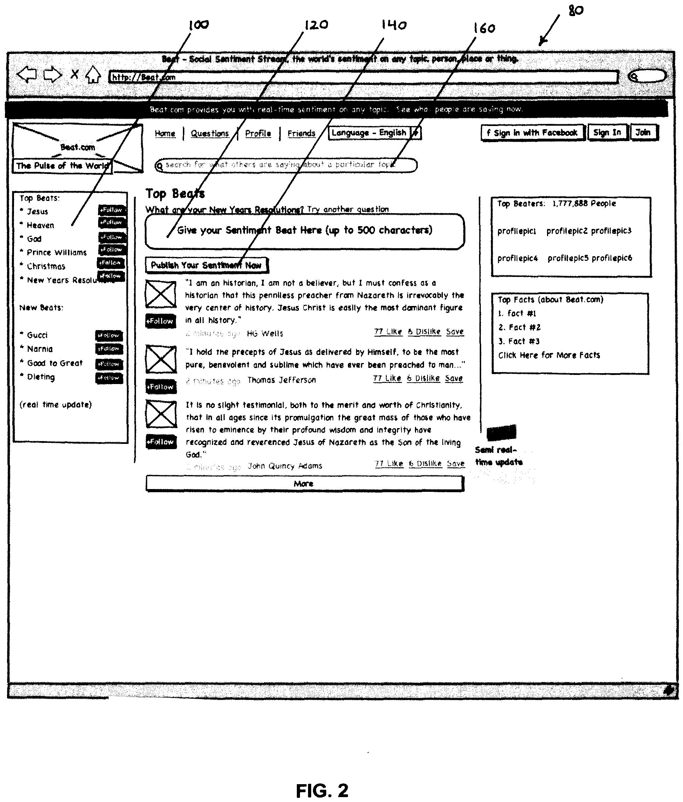

Figure 2 illustrates an embodiment of a visual interface 80 shown as an implementation of the website. In a preferred form, the website will have the domain: www.beat.com. Sidebar 100 lists Top Beats (topics) and New Beats. Region 120 gives a user the means to input/express his/her sentiment on the selected Beat. As shown in visual interface 80, the topic is "What are your New Year's resolutions?" Once a user enters a sentiment and clicks "Publish your Sentiment Now" at 140, such sentiment becomes publicly available, searchable, collectable, and open for feedback (like, dislike, save, forward) from other users. Such feedback forms part of the rating profile of that user. Search bar 160 allows the user to enter keywords relating to other topics on which it is desired to view sentiments. Interface 80 provides a list of visualization tools that the user can use to view and interact with the website.

With regard to submission of a Beat or topic, the system provides check points and safeguards to assess the appropriateness of the subject for public display. The system may also keep a block list of particular topics or users (or URLs) that have been previously reported to administrators. This will mitigate SPAM infiltration of the website and problematic users. When a topic submitted by an Input User has been accepted, it is created in database 60. Information such as the submission time and user who submitted the topic is stored.

When another user ("Sentiment Expresser") expresses a comment on the accepted and stored Beat/topic, one or more levels of feedback occur. Input User may be notified that a user has expressed a sentiment on his/her topic. Contacts of Input User may be so notified. Topic followers may be so notified. Followers of the Sentiment Expresser may be so notified. As further users like, dislike, save and/or share the sentiment, other notifications may occur.

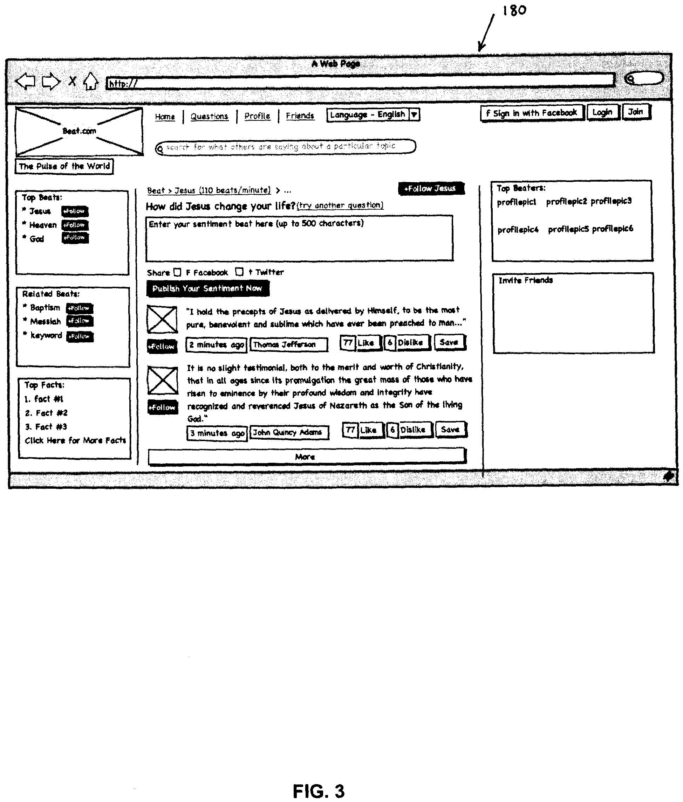

Figure 3 illustrates an embodiment of another visual interface 180.

It is anticipated that topic sentiments or Beats will require both active and passive distribution to ensure "virality". In a preferred form, sentiments are made viral by a user auto posting sentiments to other sites such as Facebook, Twitter, tumblr, MySpace and word press accounts. User can post sentiments manually on Facebook wall or (if logged into website of the present invention using Facebook log-in information), undertake one or more the following:
- Post on Facebook wall (share) - this can be automated if user logged in to website of the present invention via Facebook
- Post on Twitter feed (if more than 140 characters, there may be a URL that connects back to the site) - this can be automated if user logged in to website of the present invention via Twitter
- User creates tagline on his/her Beat, "What do you think about "topic X"? Click Here." with link to the topic page
- Connect with Facebook, Twitter, Wordpress (blogs), Tumblr (microblogs), Myspace (music), email (download contacts)
- Connect and Beat via Iphone app, ipad app, android applications
- User may add a widget on their Facebook, Tumblr, Wordpress, Myspace page showing his or her published sentiments with a link to:
   i. Invite friends to follow his/her beats or Topic, ask questions to user, and/or answer sentiment.

In one embodiment of the present invention, virality will be encouraged by placement of links relating to the website on other websites. For example, a beat.com widget may be placed on a topically appropriate website ("Feeder Site"). In a further preferred embodiment, such a widget on a Feeder Site may include a topic relating to the content, use, ideas suggested or purpose of the Feeder Site. Users at a visual interface of the Feeder Site may view the topic and express a sentiment thereon which sentiment may be viewable on the Feeder Site and linked back to the website of the system of the present invention. For example, heaven.com may include the display of a Beat.com widget which introduces a topic/invites users to answer the question *"What do you think Heaven is like?"* Any sentiments in reply expressed by users will not only post to heaven.com but also to beat.com under the topic of heaven, thus building/creating a searchable database of sentiments under the topic "Heaven".

The number of linkable sites is limitless. It is anticipated that topically related domain names, selected from the group consisting of heaven.com (heaven), hell.com (hell), libya.com (topic example: Egypt / Tunisia revolutions), celebritys.com or celebrities.com (topic example: royal wedding), mybible.com - Bible, god.org - God, soapopera.com - soap operas, mother.com - mother, bigapple.com - New York, [insert any health issue].com, such as lupus.com - topic example: lupus, will be both popular and thought provoking feeds for the flow, exchange and sharing of topics and sentiments.

Within the scope of the present invention, users will be allowed to answer banks of questions upon which sentiment can be expressed. For example, topics can include royal wedding, Justin Bieber, Jesus, Heaven etc....Virality is based on not only on users selecting topics or questions to send to their network but to follow others. It is anticipated that the website will perpetuate virality by a notification system: for example, a) users notified of (via email, Twitter, Facebook or other means) a list of the weekly top 10 sentiments of followed topics; b) user notified (by any of the means above) when another user is following him/her; c) users notified of expansive topic tracking, for example "People who Follow this Topic also Follow these topics:Topic1, Topic2, Topic3 ..."

Within a preferred form of the present invention, users may be rewarded via points to determine trust and rank. Points may be rewarded for a variety of actions. For example, when a contact to whom the user has sent a topic to express on or sentiment on a topic message, clicks on the link and experiences the sentiment or topic, the user who sent the message is awarded points. If the contact sends messages to his or her contacts about the content, then the user who originally sent the message to that contact is awarded additional points. Generally, points may be awarded based on the contribution of a user (for example the number of new topics entered, responsiveness of other users to those topics, responsiveness of user to other user's topics, number of "likes" associated with sentiments of that user etc...). The user is awarded "points" by the system which are stored in a database and associated with that user. Users can also be given ratings by their contacts, and receive additional points for favorable ratings. In addition, users may lose points, for example if a contact blocks messages from the user. In an embodiment of the invention, if a predetermined number of these blocks are applied to a user, the number of messages they can send to contacts may be reduced.

To incentivize users, and perpetuate virality, the system may provide rewards. For example, there may be prizes rewarded each month based on the number of points received. Alternatively, points can be redeemed for goods and services. Prizes may be used to promote the system to new and prospective users.

The system may provide automated translation services to translate English content into other languages or may "target" certain countries, for example by awarding additional points for contacts experiencing the content in those countries. Also users may be awarded points if they or their contacts translate a particular piece of content.

A user can select to view topics or sentiments by category, so for example, when they access the home web page they are offered a search tool bar and may enter, for example: "Obama" to source all sentiments on that topic.

The system may also employ an algorithm to connect users with other users with similar sentiments on a given topic. The system can then suggest to one of the users that the other be added as a contact.

Users may be encouraged to register with the system by being only partially able to experience the content until registering, with registration required to experience the full content.

As will be apparent to those skilled in the art, the various embodiments described above can be combined to provide further embodiments. Aspects of the present systems, methods and components can be modified, if necessary, to employ systems, methods, components and concepts to provide yet further embodiments of the invention. For example, the various methods described above may omit some acts, include other acts, and/or execute acts in a different order than set out in the illustrated embodiments.

The present methods, systems and articles also may be implemented as a computer program product that comprises a computer program mechanism embedded in a computer readable storage medium. For instance, the computer program product could contain program modules. These program modules may be stored on CD-ROM, DVD, magnetic disk storage product, flash media or any other computer readable data or program storage product. The software modules in the computer program product may also be distributed electronically, via the Internet or otherwise, by transmission of a data signal (in which the software modules are embedded) such as embodied in a carrier wave.

For instance, the foregoing detailed description has set forth various embodiments of the devices and/or processes via the use of examples. Insofar as such examples contain one or more functions and/or operations, it will be understood by those skilled in the art that each function and/or operation within such examples can be implemented, individually and/or collectively, by a wide range of hardware, software, firmware, or virtually any combination thereof In one embodiment, the present subject matter may be implemented via ASICs. However, those skilled in the art will recognize that the embodiments disclosed herein, in whole or in part, can be equivalently implemented in standard integrated circuits, as one or more computer programs running on one or more computers (e.g., as one or more programs running on one or more computer systems), as one or more programs running on one or more controllers (e.g., microcontrollers) as one or more programs running on one or more processors (e.g., microprocessors), as firmware, or as virtually any combination thereof, and that designing the circuitry and/or writing the code for the software and or firmware would be well within the skill of one of ordinary skill in the art in light of this disclosure.

In addition, those skilled in the art will appreciate that the mechanisms taught herein are capable of being distributed as a program product in a variety of forms, and that an illustrative embodiment applies equally regardless of the particular type of signal bearing media used to actually carry out the distribution. Examples of signal bearing media include, but are not limited to, the following: recordable type media such as floppy disks, hard disk drives, CD ROMs, digital tape, flash drives and computer memory; and transmission type media such as digital and analog communication links using TDM or IP based communication links (e.g., packet links).

Further, in the methods taught herein, the various acts may be performed in a different order than that illustrated and described. Additionally, the methods can omit some acts, and/or employ additional acts.

These and other changes can be made to the present systems, methods and articles in light of the above description. In general, in the following claims, the terms used should not be construed to limit the invention to the specific embodiments disclosed in the specification and the claims, but should be construed to include all possible embodiments along with the full scope of equivalents to which such claims are entitled. Accordingly, the invention is not limited by the disclosure, but instead its scope is to be determined entirely by the following claims.

## Claims

1. A computer implemented method of collecting, exchanging and displaying both real-time and historical sentiments on a topic comprises establishing a topic upon which a sentiment can be rendered; detecting and storing a sentiment on said topic and causing said sentiment to be displayed for others to view.

2. A computer implemented method of collecting, exchanging and displaying both real-time and historical sentiments on a topic comprises establishing a topic upon which a sentiment can be rendered; detecting and storing a sentiment on said topic and causing said sentiment to be displayed for others to comment upon, rate and/or share.

3. A computer implemented method of collecting and displaying both real-time and historical sentiments on a given topic comprises a means for detecting, upon a key-word search query by such user, substantially all sentiments previously expressed on said topic and displaying such sentiments previously expressed for user to view.

4. A computer implemented method of a collecting, exchanging and displaying both real-time and historical sentiments on a topic by the following steps which include a) having a user ("Input User") input his/her sentiment on a topic ("Sentiment Input") for display on a web page which is accessible to a plurality of other users, said web page being available to users for the offering and receiving of such sentiments; b) optionally transmitting the Sentiment Input to a subset of web page users who may have previously expressed interest in following the sentiments of the Input User and/or following the topic; and c) storing the Sentiment Input such that it becomes searchable to all internet users based on keywords therein and in the topic itself

5. A computer-readable storage medium having computer-executable code encoded therein for collecting, exchanging and displaying both real-time and historical sentiments on a topic by a user comprises computer instructions for making available to a user a topic upon which a sentiment can be rendered; detecting and storing a sentiment by said user on said topic and causing said sentiment to be displayed for others to view.

6. A computer-readable storage medium having computer-executable code encoded therein for collecting and displaying both real-time and historical sentiments on a given topic comprises computer instructions for making available to a user, upon a key-word search query by such user, substantially all sentiments previously expressed on said topic.
